# EUROPÄISCHE PATENTSCHRIFT

(11) **EP 0 714 765 B1**
(45) Veröffentlichungstag und Bekanntmachung des Hinweises auf die Patenterteilung: **23.08.2000**
(21) Anmeldenummer: 95114867.5
(22) Anmeldetag: 21.09.1995
(51) Int. Cl.: B32B 31/10, B32B 15/08

(54) **Verfahren zur Herstellung eines Folienverbundes**
Method of making laminated sheets
Procédé pour la fabrication de feuilles laminées

(30) Priorität: 02.12.1994 DE 4442920
(43) Veröffentlichungstag der Anmeldung: 05.06.1996
(73) Patentinhaber: W.C. Heraeus GmbH & Co. KG, 63450 Hanau (DE)
(72) Erfinder: Herklotz, Günter, Dr., D-63486 Bruchköbel (DE); Bauer, Alfred, D-63755 Alzenau (DE); Hartmann, Horst, D-63454 Hanau (DE); Wenzel, Gerhard, D-63454 Hanau (DE)
(74) Vertreter: Kühn, Hans-Christian

(56) Entgegenhaltungen:
- EP-A- 0 603 035
- US-A- 4 295 912
- US-A- 4 790 895
- US-A- 5 023 751

## Beschreibung

Die Erfindung betrifft ein Verfahren zur Herstellung eines eine Metallfolie und eine Kunststoff-Folie enthaltenden Folienverbundes, bei dem die Stanzstrukturen aufweisenden Folien aneinandergeführt und miteinander verklebt werden.

Ein derartiges Verfahren ist aus US-A-5 023 751 bekannt. Hier ist beschrieben, zwei Endlosbänder zusammenzuführen. Desweiteren ist eine Möglichkeit offenbart, auf ein Metallband isolierende Folienabschnitte aufzubringen, wobei diese vorzugsweise an ihren Enden fortlaufend miteinander zu einem Endlosband verbunden sind, um die Handhabung zu verbessern. Aus US-A-4 295 912 ist das Aneinanderfügen von Endlosbahnen aus Kunststoff und Metall bekannt.

Aus der WO-92/15118 ist es bekannt, zwei Folienbahnen derart aufeinander zu bringen, daß Stanzmarkierungen der einen Folienbahn an der gleichen Stelle des Folienverbundes angeordnet sind, wie die Stanzmarkierungen der zweiten Folienbahn. Dazu wird die Lage der Stanzmarkierungen überwacht und ein eventueller Versatz zwischen den Stanzmarkierungen der beiden Folienbahnen wird dadurch ausgeglichen, daß die Größe dieses Versatzes gemessen wird und entsprechend dieser Größe die beiden Folienbahnen vor dem Zusammenfügen mit einer unterschiedlichen Temperatur beaufschlagt werden, um durch die dadurch bewirkte unterschiedliche Ausdehnung der beiden Folienbahnen den Versatz auszugleichen. Zusätzlich kann die eine Folienbahn mit einer Zugspannung beaufschlagt werden, so daß die dadurch erzeugte Dehnung dieser Folienbahn zum Ausgleich des Versatzes beiträgt. Ein derartiges Verfahren erfordert einen hohen apparativen Aufwand, um die unterschiedliche Temperaturbeaufschlagung der beiden Folienbahnen zu realisieren und um zu gewährleisten, daß erforderliche Temperaturveränderungen in einer sehr kurzen Zeit erfolgen können, um den Abschnitt des Folienverbundes, der diesen Versatz aufweist, möglichst klein halten zu können. Der für eine solche Regelung über Temperaturänderungen bzw. über Zugspannungen benötigte Regelkreis ist sehr kompliziert und in der Regel reaktionsträge. Des weiteren ist es problematisch, zwei Folien unter derartigen Ausgangsbedingungen fest miteinander zu verbinden, da nach Wegfall der Zugkraft bzw. nach Angleichen der Temperaturen der beiden Folienbahnen in diesem Folienverbund thermomechanische Spannungen zwischen den beiden Folienbahnen auftreten, die dazu führen können, daß sich der Folienverbund verformt oder daß sich die beiden Folienbahnen voneinander lösen. Ein ähnliches Verfahren ist aus der DE 29 39 014 bekannt. Hier wird die Lage der beiden Folienbahnen zueinander durch Änderung der Vorschubgeschwindigkeit der Folienbahnen geregelt.

Ausgehend von dem vorstehend beschriebenen Stand der Technik besteht die Aufgabe der vorliegenden Erfindung darin, ein Verfahren anzugeben, mit dem eine Metallfolie und eine Kunststoff-Folie derart miteinander verbunden werden können, daß mit möglichst geringerem Aufwand der Versatz zwischen den Stanzstrukturen der beiden Folien möglichst gering gehalten wird.

Erfindungsgemäß wird die Aufgabe für das eingangs charakterisierte Verfahren dadurch gelöst, daß eine erste Folie in Form von aufeinanderfolgenden, vereinzelten Folienbahnabschnitten und eine zweite Folie in Form einer Endlos-Folienbahn aneinandergeführt werden, wobei die Folienbahnabschnitte hintereinander und voneinander getrennt an definierten Stellen der Endlos-Folienbahn angeordnet und mit ihr verklebt werden. Dadurch wird das Problem des sich vergrößernden Versatzes bei Verkleben von zwei Endlos-Folienbahnen beseitigt. An eine Endlos-Folienbahn werden begrenzte Folienbahnabschnitte einer zweiten Folie angelegt, wobei bei jedem Folienbahnabschnitt eine definierte Ausrichtung erfolgt. Ein Fehler, der gegebenenfalls bei einem Folienbahnabschnitt auftritt, setzt sich nicht auf weitere Folienbahnabschnitte fort und bleibt deshalb lokal extrem begrenzt. Der nachfolgende Folienbahnabschnitt wird wieder in einer definierten Position auf die Endlos-Folienbahn aufgebracht. Ein derart hergestellter Folienverbund, wie er beispielsweise zur Herstellung von IC-Karten verwendet wird, weist damit eine sehr hohe Genauigkeit auf. Vorzugsweise ist dabei die Metallfolie als Endlos-Folienbahn ausgebildet, da die Metallfolie unter anderem mechanisch widerstandsfähiger und stabiler als eine Kunststoff-Folie ist.

In der erfindungsgemäßen Ausführungsform des Verfahrens werden die Folien getaktet aneinander geführt, beispielsweise dadurch, daß ein Greifersystem die Folienbahnabschnitte nach dem Abtrennen von einem Endlosband taktweise an die Endlos-Folienbahn heranführt, dabei ist es notwendig, daß die Folienbahnabschnitte unterhalb der Endlos-Folienbahn an dieser angeordnet werden.

Zweckmäßig ist es weiterhin, daß an den Folienbahnabschnitten und der Endlos-Folienbahn angeordnete Positionsmarkierungen mittels Führungsstiften übereinander angeordnet werden, da hierdurch eine sehr genaue Positionierung auf einfache Weise realisiert werden kann.

Es hat sich als vorteilhaft erwiesen, daß die Folien nach dem Aneinanderführen in einem ersten Schritt an einem Teil ihrer Berührungsflächen aneinandergeheftet und in einem zweiten Schritt ganzflächig miteinander verklebt werden, insbesondere, daß die Folien etwa auf der Hälfte der Länge der Folienbahnabschnitte aneinandergeheftet werden, wobei zweckmäßigerweise der mittlere Teil eines Folienbahnabschnittes an die Endlos-Folienbahn geheftet wird. Dadurch ist eine sehr schnelle und genaue Fixierung der beiden Folien aneinander möglich, so daß die Folien sich während des ganzflächigen Verklebens nicht gegeneinander verschieben können. Insbesondere ist es zweckmäßig, daß die Folien thermisch, also unter Hitzeeinwirkung miteinander verklebt werden. Hierzu können die bekannten Heißkleber verwendet werden. Nach dem thermischen Verkleben kann der Folienverbund nochmals thermisch nachbehandelt werden. Als zweckmäßig hat es sich, insbesondere im Hinblick auf eine Verwendung des Folienverbundes für die Herstellung von IC-Karten erwiesen, etwa 200 mm lange Folienbahnabschnitte zu verwenden.

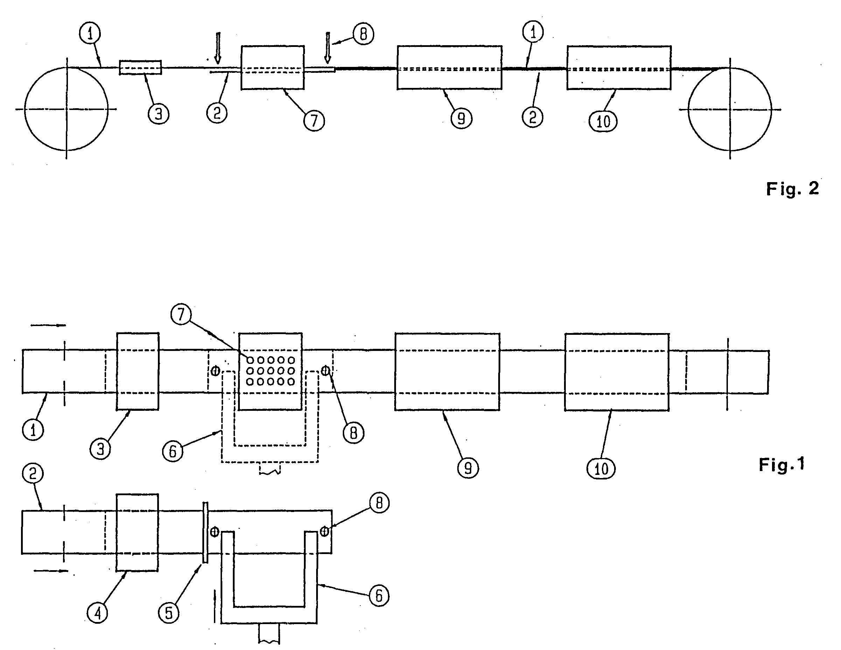

Nachfolgend wird die Erfindung anhand eines Ausführungsbeispieles mittels einer Zeichnung näher erläutert. In der Zeichnung zeigt
- Figur 1: die schematische Darstellung einer Vorrichtung zur Durchführung des erfindungsgemäßen Verfahrens in der Draufsicht und
- Figur 2: die schematische Darstellung der Herstellung des Folienverbundes von der Seite.

Eine Metallfolie 1 und eine Kunststoff-Folie 2 sind jeweils auf einer Spule aufgewickelt. Beide Folien 1;2 weisen sich in Längsrichtung der Folienbahn in gleichmäßigen Abständen wiederholende Stanzstrukturen auf. Die Folien werden von Taktvorschubgeräten 3;4 von den Spulen abgewickelt und der weiteren Bearbeitung zugeführt. Dabei wird die Kunststoff-Folie 2 in der Trenneinrichtung 5 in etwa 200 mm lange Folienbahnabschnitte getrennt. Jeweils ein solcher Folienbahnabschnitt wird im Takt des Taktvorschubgerätes 4 von einem Greifer 6 erfaßt und der thermischen Heftstation 7 zugeführt. Gleichzeitig und im gleichen Takt wird durch das Taktvorschubgerät 3 die Endlos-Folienbahn der Metallfolie 1 der thermischen Heftstation 7 zugeführt. Dabei wird der jeweilige Folienbahnabschnitt 2 unterhalb der Metallfolie 1 angeordnet.

Führungsstifte 8 (auch Positionsstifte genannt) greifen in auf beiden Folien 1;2 angeordnete Positionsmarkierungen ein, so daß diese Positionsmarkierungen exakt übereinander angeordnet und damit lagegenau positioniert werden.

Nach dem Positionieren werden die beiden Folien 1;2 punktförmig auf einer Länge von etwa 100 mm am mittleren Bereich des Folienbahnabschnittes 2 in etwa 1 bis 2 Sekunden bei etwa 170°C aneinandergeheftet. Es ist auch eine Heftung an den Ecken des Folienbahnabschnittes 2 möglich. Nach diesem Vorgang wird die Folienbahn der Metallfolie 1 mit dem angehefteten Folienbahnabschnitt der Kunststoff-Folie 2 im Takt des Taktvorschubgerätes 3 an die Klebestation 9 weitergeleitet. Dort werden beide Folienbahnen 1;2 in etwa 30 Sekunden bei etwa 180°C auf der gesamten Fläche des Folienbahnabschnittes der Kunststoff-Folie 2 miteinander zu einem Folienverbund fest verklebt. Alternativ sind Klebungen von z. B. 60 Sekunden Dauer bei 150°C möglich. Dieser Folienverbund aus Metallfolie 1 und Kunststoff-Folie 2 wird, wiederum im gleichen Takt, an die Nachbehandlungsstation 10 übergeben und dort bei etwa 110°C mit einem üblichen Rollenlaminator thermisch nachbehandelt. Als Klebstoff dient herkömmlicher Heißkleber, wie beispielsweise ein Zweikomponentenepoxidharz.

Nach der Herstellung des Folienverbundes wird dieser zur Lagerung und zum Transport auf eine Spule aufgewickelt.

## Patentansprüche

1. Verfahren zur Herstellung eines eine Metallfolie und eine Kunststoff-Folie enthaltenden Folienverbundes, bei dem die Stanzstrukturen aufweisenden Folien aneinandergeführt und miteinander verklebt werden, wobei eine erste Folie in Form von aufeinanderfolgenden, vereinzelten Folienbahnabschnitten und eine zweite Folie in Form einer Endlos-Folienbahn aneinandergeführt werden und wobei die Folienbahnabschnitte hintereinander und voneinander getrennt an definierten Stellen der Endlos-Folienbahn angeordnet und mit ihr verklebt werden, dadurch gekennzeichnet, daß die Folien (1; 2) getaktet aneinandergeführt werden und daß die Folienbahnabschnitte (2) unterhalb der Endlos-Folienbahn (1) an dieser angeordnet werden.

2. Verfahren nach Anspruch 1, dadurch gekennzeichnet, daß die Metallfolie als Endlos-Folienbahn (1) ausgebildet ist.

3. Verfahren nach Anspruch 1 oder 2, dadurch gekennzeichnet, daß an den Folienbahnabschnitten (2) und der Endlos-Folienbahn (1) Positionsmarkierungen mittels Führungsstiften (8) übereinander angeordnet werden.

4. Verfahren nach einem der Ansprüche 1 bis 3, dadurch gekennzeichnet, daß die Folien nach dem Aneinanderführen in einem ersten Schritt an einem Teil ihrer Berührungsflächen aneinandergeheftet und in einen zweiten Schritt ganzflächig miteinander verklebt werden.

5. Verfahren nach Anspruch 4, dadurch gekennzeichnet, daß die Folien auf etwa der Hälfte der Länge der Folienbahnabschnitte (2) aneinandergeheftet werden.

6. Verfahren nach einem der Ansprüche 1 bis 5, dadurch gekennzeichnet, daß die Folien thermisch miteinander verklebt werden.

## Claims

1. Method for producing a laminate comprising a metal foil and a plastic foil, in which the foils, which have stamped structures, are brought together and bonded with each other, wherein a first foil in the form of a succession of separate cut sections of foil web and a second foil in the form of an endless foil web are brought together and wherein the cut sections of foil web are successively and individually placed at defined positions on the endless web and bonded thereto, characterized in that the foils (1; 2) are brought together in a timed cycle and in that the cut sections (2) of foil web are placed underneath the endless web (1).

2. Method according to Claim 1, characterized in that the metal foil is formed as the endless web (1).

3. Method according to Claim 1 or 2, characterized in that positioning marks on the cut sections (2) of foil web and endless web (1) are brought into register by means of guide pins (8).

4. Method according to any one of Claims 1 to 3, characterized in that the foils after having been brought together are tacked together in part of their area of contact in a first step and are bonded together over their whole area in a second step.

5. Method according to Claim 4, characterized in that the foils are tacked together over about half the length of the cut sections (2) of foil web.

6. Method according to any one of Claims 1 to 5, characterized in that the foils are bonded together thermally.

## Revendications

1. Procédé pour fabriquer un film composite comportant un film métallique et un film en matière plastique, dans lequel les films présentant des structures estampées sont rapprochés et collés l'un à l'autre, un premier film sous forme de tronçons de nappe individuels successifs et un second film sous forme de nappe sans fin étant rapprochés l'un de l'autre et les tronçons de nappe séparés les uns des autres étant disposés les uns derrière les autres à des emplacements définis de la nappe sans fin et étant collés avec celle-ci, caractérisé en ce que les films (1 ; 2) sont rapprochés en cadence l'un de l'autre, et en ce que les tronçons de nappe (2) sont disposés au-dessous de la nappe sans fin (1) contre celle-ci.

2. Procédé selon la revendication 1, caractérisé en ce que le film métallique est réalisé sous forme de nappe sans fin (1).

3. Procédé selon l'une ou l'autre des revendications 1 et 2, caractérisé en ce que des marquages de position sur les tronçons de nappe (2) et sur la nappe sans fin (1) sont superposés au moyen de broches de guidage (8).

4. Procédé selon l'une quelconque des revendications 1 à 3, caractérisé en ce qu'après le rapprochement, on agrafe les films l'un à l'autre sur une partie de leurs surfaces de contact en une première opération, et en ce qu'on les colle ensemble sur toute la surface en une seconde opération.

5. Procédé selon la revendication 4, caractérisé en ce que l'on agrafe les films approximativement sur la moitié de la longueur des tronçons de nappe (2).

6. Procédé selon l'une quelconque des revendications 1 à 5, caractérisé en ce que l'on colle les films ensemble par voie thermique.
